# EUROPEAN PATENT APPLICATION

(11) **EP 4 801 099 A1**
(43) Date of publication of application: **02.09.2026**
(21) Application number: 25160357.7
(22) Date of filing: 26.02.2025
(51) Int. Cl.: H04W 24/10

(54) **MEASUREMENT REPORTING**

(71) Applicant: Nokia Technologies Oy, 02610 Espoo (FI)
(72) Inventor: Faranaz, Sabouri-Sichani, 9220 Aalborg Ø (DK); Höhne, Hans, 00410 Helsinki (FI); Kainulainen, Jani-Pekka, Cambridge, CB3 0FA (GB); Dimnik, Riikka, 02880 Kirkkonummi (FI)
(74) Representative: Swindell & Pearson Limited

(57) **Abstract**

Examples of the disclosure relate to measurement reporting. An apparatus receives a configuration comprising at least one reporting condition for reporting measurement results. The reporting condition is to be used upon transitions of the apparatus to a connected mode. The apparatus determines whether the at least one reporting condition has been satisfied. Determining whether the at least one reporting condition has been satisfied comprises determining a probability that carrier aggregation (CA) or dual connectivity (DC) are to be setup after transition to a connected mode. The apparatus reports measurement results based on the determination.

## Description

### TECHNOLOGICAL FIELD

Examples of the disclosure relate to measurement reporting. Some relate to conditional early measurement reporting.

### BACKGROUND

Early measurement reporting (EMR) enables a user equipment (UE) to report measurements performed in a non-connected mode on transition to a connected mode. This enables the network to receive UE assisted measurements during an early phase of the UE being in connected mode.

### BRIEF SUMMARY

According to various, but not necessarily all, examples of the disclosure there may be provided an apparatus comprising:
at least one processor;
and at least one memory storing instructions that, when executed by the at least one processor, cause the apparatus to perform at least:
   receiving a configuration, the configuration comprising at least one reporting condition for reporting measurement results, the reporting condition to be used upon transitions of the apparatus to a connected mode;
   determining whether the at least one reporting condition has been satisfied, wherein determining whether the at least one reporting condition has been satisfied comprises determining a probability that carrier aggregation (CA) or dual connectivity (DC) are to be setup after transition to a connected mode; and
   reporting measurement results based on the determination.

The at least one reporting condition may indicate a threshold for data volume which has triggered a transition to a connected mode at which CA/DC may be needed and at which the apparatus should report the measurement results and determining a probability that CA/DC are to be setup may comprise determining whether the threshold for the data volume has been exceeded.

The configuration may indicate multiple reporting conditions and different reporting conditions relate to different thresholds for data volume.

The thresholds for data volume may be set by a network entity.

Determining if the threshold for the data volume has been exceeded may comprise one of:
determining pending uplink data volume ;
receiving an indication of data volume from a network entity; or
receiving an indication that the threshold for the data volume has been exceeded from a network entity.

The configuration may indicate at least one band combination or SCell configuration or PSCell configuration for use in a CA/DC setup.

The configuration may indicate which cells could be used for CA/DC and the measurement report may relate to the cells that could be used for CA/DC.

The configuration may be received at transition from a connected state to a non-connected state.

The configuration may be received via at least one of:
Radio Resource Control (RRC) message
System Information Block (SIB).

The at least one processor and the at least one memory may also be arranged to cause the apparatus to determine availability of measurement results.

The at least one processor and the at least one memory may also be arranged to cause the apparatus to perform continuing measurements on a configured carrier list after the transition to connected mode.

The at least one processor and the at least one memory may also be arranged to cause the apparatus to perform reporting the measurement results when the measurements are completed.

The at least one processor and the at least one memory may also be arranged to cause the apparatus to perform reporting the measurement results without receiving a request for the measurement report.

Reporting the measurement results may comprise requesting uplink resources.

Reporting the measurement results may comprise searching for dynamic grants.

The configuration may be for early measurement reporting.

According to various, but not necessarily all, examples of the disclosure there may be provided a method comprising:
receiving a configuration, the configuration comprising at least one reporting condition for reporting measurement results, the reporting condition to be used upon transitions of the apparatus to a connected mode;
determining whether the at least one reporting condition has been satisfied, wherein determining whether the at least one reporting condition has been satisfied comprises determining a probability that carrier aggregation (CA) or dual connectivity (DC) are to be setup after transition to a connected mode; and
reporting measurement results based on the determination.

According to various, but not necessarily all, examples of the disclosure there may be provided a computer program comprising computer program instructions for causing an apparatus to perform at least the following or for performing at least the following
receiving a configuration, the configuration comprising at least one reporting condition for reporting measurement results, the reporting condition to be used upon transitions of the apparatus to a connected mode;
determining whether the at least one reporting condition has been satisfied, wherein determining whether the at least one reporting condition has been satisfied comprises determining a probability that carrier aggregation (CA) or dual connectivity (DC) are to be setup after transition to a connected mode; and
reporting measurement results based on the determination.

According to various, but not necessarily all, examples of the disclosure there may be provided a network entity comprising:
at least one processor;
and at least one memory storing instructions that, when executed by the at least one processor, cause the network entity to perform at least:
   transmitting a configuration, the configuration comprising at least one reporting condition for reporting measurement results, the reporting condition to be used upon transitions of an apparatus to a connected mode;
   receiving a report from the apparatus, the report comprising measurement results and the report being sent in accordance with the at least one reporting condition; and
   determining whether to enable carrier aggregation or dual connectivity based on the received report.

The at least one reporting condition may relate to a probability that carrier aggregation (CA) or dual connectivity (DC) are to be used after transition to a connected mode.

The at least one reporting condition may indicate a threshold for data volume which has triggered a transition to the connected mode has been exceeded.

The at least one processor and the at least one memory may also be arranged to cause the network entity to perform:
transmitting an indication of data volume to the apparatus; or
receiving an indication that the threshold for the data volume has been exceeded to the apparatus.

The indication may comprise at least one of:
an indication within paging message;
a specified paging occasion; and
an assignment of multiple I-RNTIs.

According to various, but not necessarily all, examples of the disclosure there may be provided a method comprising:
transmitting a configuration, the configuration comprising at least one reporting condition for reporting measurement results, the reporting condition to be used upon transitions of an apparatus to a connected mode;
receiving a report from the apparatus, the report comprising measurement results and the report being sent in accordance with the at least one reporting condition; and
determining whether to enable carrier aggregation or dual connectivity based on the received report.

According to various, but not necessarily all, examples of the disclosure there may be provided a computer program comprising computer program instructions for causing a network entity to perform at least the following or for performing at least the following:
transmitting a configuration, the configuration comprising at least one reporting condition for reporting measurement results, the reporting condition to be used upon transitions of an apparatus to a connected mode;
receiving a report from the apparatus, the report comprising measurement results and the report being sent in accordance with the at least one reporting condition; and
determining whether to enable carrier aggregation or dual connectivity based on the received report.

According to various, but not necessarily all, embodiments there is provided an apparatus comprising:
at least one processor; and
at least one memory;
the at least one memory storing instructions that, when executed by the at least one processor, cause the apparatus to perform at least a part of one or more methods described herein.

According to various, but not necessarily all, embodiments there is provided an apparatus comprising means for performing at least part of one or more methods described herein. The description of a function and/or action should additionally be considered to also disclose any means suitable for performing that function and/or action. Functions and/or actions described herein can be performed in any suitable way using any suitable method.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or instructions as desired, and as appropriate. The description of a function should additionally be considered to also disclose any means suitable for performing that function

### BRIEF DESCRIPTION

Some examples will now be described with reference to the accompanying drawings in which:
FIG. 1 shows an example network;
FIG. 2 shows an early measurement reporting procedure;
FIGS. 3A to 3D show example methods;
FIG. 4 shows an early measurement reporting procedure;
FIG. 5 shows an early measurement reporting procedure; and
FIG. 6 shows an example controller.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Corresponding reference numerals are used in the figures to designate corresponding features. For clarity, all reference numerals are not necessarily displayed in all figures.

### DEFINITIONS

- AS: Access Stratum
- ASN. 1: Abstract Syntax Notation One
- BSR: Buffer Status Report
- CA: Carrier Aggregation
- DC: Dual Connectivity
- DG: Dynamic Grants
- DL: Downlink
- EMR: Early Measurement Reporting
- EPI: Early Paging Indication
- gNB: gNodeB
- HO: Handover
- I-RNTI: Interactive - Radio Network Temporary Identifier
- MO: Mobile Oriented
- MT: Mobile Terminated
- PCell: Primary Cell
- PSCell: Primary Secondary Cell
- PO: Paging Occasion
- RACH: Random Access Channel
- RRC: Radio Resource Control
- RRM: Radio Resource Management
- RSRP: Reference Signal Received Power
- SCell: Secondary Cell
- SIB: System Information Block
- SR: Scheduling Request
- UE: User Equipment
- UL: Uplink

### DETAILED DESCRIPTION

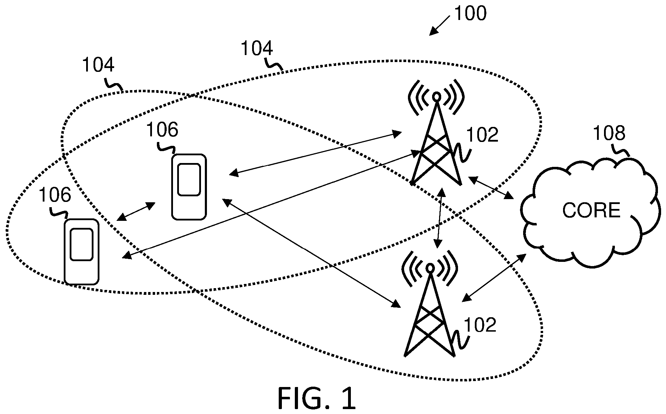

Fig. 1 illustrates an example of a communication network 100 to which examples of the disclosure can be applied. The communication network 100 is a cellular communication network. The communication network 100 comprises network access nodes 102. The network access nodes 102 provide one or more cells 104. The cells 104 may define a coverage area or a service area of the corresponding network access node 102.

The network access nodes 102 can provide one or more user equipments (UE) 106 with wireless access to the communication network. The wireless access may comprise downlink (DL) communication from the network access node 102 to the UE 106 and uplink (UL) communication from the UE 106 to the network access node 102. Examples of uplink channels comprise physical uplink control channel (PUCCH) for transmitting control information and physical uplink shared channel (PUSCH) for transmitting data towards the network access nodes 102. Examples of downlink channels comprise physical downlink control channel (PDCCH) for transmitting control information and physical downlink shared channel (PDSCH) for transmitting data towards the UE 106.

There may be a plurality of UEs 106 in the network 100. Respective UEs 106 can be served by the same or by different network access nodes 102.

If the communication network 100 comprises multiple network access nodes 102 the network access nodes 102 can be connected to each other via an interface. LTE specifications refer to such an interface as an X2 interface. An interface between an LTE node and a 5G node, or between two 5G nodes can be called an Xn interface.

The network access nodes 102 can be further connected via another interface to a core network 108 of the communication network 100. The core network 108 can comprise core network nodes. The LTE specifications specify the core network as an evolved packet core (EPC), and the core network may comprise such as a mobility management entity (MME) and a gateway node. The MME may handle mobility of terminal devices in a tracking area encompassing a plurality of cells and handle signalling connections between terminal devices such as the UEs 106 and the core network 108. The gateway node may handle data routing in the core network 108 and to/from terminal devices such as the UEs 106. The 5G specifications specify the core network as a 5G core (5GC). The 5G core may comprise, for example, an access and mobility management function (AMF) and a user plane function/gateway (UPF) and other functions. The AMF may handle termination of non-access stratum (NAS) signalling, NAS ciphering & integrity protection, registration management, connection management, mobility management, access authentication and authorization, security context management. The UPF node may support packet routing and forwarding, packet inspection and quality of service (QoS) handling, for example. In other types of network other types of entities can be provided within the core network 108.

Carrier aggregation (CA) and/or dual connectivity (DC) can be used in networks 100 such as the communication network 100 shown in Fig. 1 to allow higher peak data rates and to offload traffic of a UE 106 to more cells. The additional carriers can be added as secondary cells (SCell) in CA or primary secondary cells (PSCell) in DC. The UE 106 provides radio resource management (RRM) measurement reports to a network entity such as a network access node 102. The network entity uses the RRM measurement reports for mobility and for identifying appropriate SCell or PSCell for addition if needed. Before an SCell or PSCell can be added the UE 106 has to be configured with the measurements and the RRM measurement reports have to be provided. This can take between 500 - 2000 ms after the UE 106 has transitioned to a connected mode, which is a long time.

To reduce the delay early measurement reporting (EMR) can be used. EMR enables the UE 106 to be configured to report measurements performed in a non-connected mode to the network entity on transition to the connected mode. This enables the network entity to receive UE assisted measurements from carriers during an early phase of the UE 106 being in connected mode.

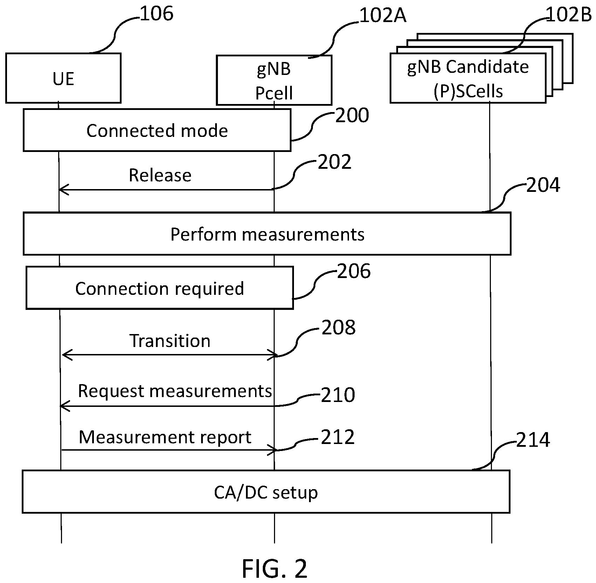

Fig. 2 shows an example early measurement reporting procedure. The early measurement reporting procedure is implemented by a UE 106 and multiple network entities. In this case a first network entity 102A is a gNB of a PCell and one or more other network entities 102B are the gNBs of candidate SCells or the gNBs of candidate PSCells.

At block 200 the UE 106 is in a connected mode with a PCell. The connected mode can be RRC_CONNECTED.

At block 202 the UE 106 is released from the connected mode. The first network entity 102A can release the UE 106 by sending an RRCRelease signal. Upon releasing the UE 106 from the connected mode the first network entity 102A can provide a configuration to the UE 106. The configuration can be an early measurement report configuration. This configures the UE 106 to measure a list of carriers for early reporting when the UE 106 transitions back to the connected mode.

The configuration can be sent from the first network entity 102A to the UE 106 via Radio Resource Control (RRC) or System Information Block (SIB) or any other suitable signalling.

Once the UE 106 is released from the connected mode the UE 106 can be a non-connected mode. The non-connected mode could be an idle mode or an inactive mode.

At block 204 the UE 106 performs the measurements according to the received configuration.

At block 206 it is determined that connection is required. The determination that a connection is required can be based on the data volume for a mobile oriented (MO) or mobile terminated (MT) call.

At block 208 the UE 106 transitions to the connected mode. When the UE 106 transitions to the connected mode it informs the first network entity 102A of the availability of the measurements. The UE can also provide *validationStatus* if the first network entity 102A requests the information.

In cases where the UE 106 is transitioning from RRC_IDLE to RRC_CONNECTED, the first network entity 102A transmits, at block 210, a request to receive the measurements in *UEInformationRequest.* At block 212 the first network entity 102A receives the measurements from the UE 106 in *cUEInformationResponse.*

In cases where the UE 106 is transitioning from RRC_INACTIVE to RRC_CONNECTED, the UE 106 can append the measurement report in *RRCResumeComplete* as the access stratum (AS) security is already established.

At block 214 the received measurements are used by the first network entity 102A for fast evaluation and initiation of CA or DC.

Before the UE 106 reports the measurements the UE 106 can perform a validity check and report valid measurement results. The measurement results may be considered valid if the following conditions are met for the validity check:
- the measurements are performed before msg1 transmission for RRC resume/setup request within a defined time period
- results satisfy a measurement accuracy requirement at the measurement instance.

In some cases the UE 106 might not be required to perform the validity check. In such cases the UE 106 can report measurement results if the measurement results satisfy a measurement accuracy requirement at the measurement instance.

In the procedure shown in Fig. 2 the UE 106 needs to inform the network entity 102A about the availability of measurements and the network entity 102A needs to actively request the measurement report. Also, at the time the UE 106 transitions to the connected mode the UE 106 might not yet have measurements that meet the accuracy criteria. In some cases, if the UE 106 has valid results available it still needs to wait for a request from the network entity 102A before it makes the transition. Also, not all of the measurement results are of interest for the first network entity 102A but the procedure of Fig. 2 does not provide for filtering out the useful results.

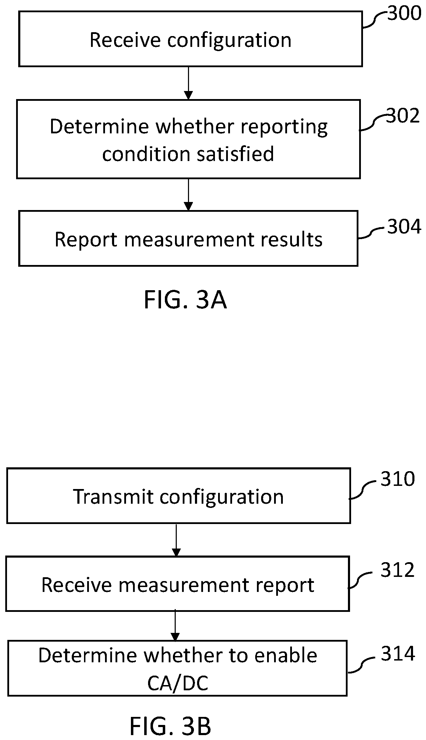

Figs. 3A to 3D show example methods that can be implemented in some examples of the disclosure. These methods can address the above mentioned issues. In these example methods the UE 106 can report the measurement results without receiving a request for the measurement report.

The example method of Fig. 3A can be implemented by a UE 106 or an apparatus controlling a UE 106.

At block 300 the method comprises receiving a configuration. The configuration comprises at least one reporting condition to be used upon transition of the UE 106 to a connected mode. The UE 106 can transition from a non-connected mode to a connected mode. The non-connected mode can be an idle mode or an inactive mode or any other suitable mode.

The reporting condition comprises one or more criteria for reporting measurement results from the UE 106 to the network entity 102A. If the UE 106 determines that the one or more criteria are satisfied then the measurements can be reported. If the UE 106 determines that the one or more criteria are not satisfied then the measurements are not reported. The criteria that are used can be related to the likelihood that the measurements will be needed by the network entity 102. For instance, the criteria could be related to the probability that CA/DC are to be setup after transition to a connected mode. In some examples the criteria could be related to the probability that handover is to be triggered.

In some examples the configuration indicates at least one band combination or SCell configuration or PSCell configuration for use in a CA/DC setup. For instance, the configuration can indicate which cells are to be used for CA/DC.

The configuration can be received from a network entity 102 such as a gNB. The configuration can be received at transition from a connected state to a non-connected state. The configuration can be received via any suitable signalling such as an RRC message or other ASN. 1 type message or SIB. The RRC message could be an RRCRelease, or RRCRelease with SuspendConfig, or an RRC message at a transition from a connected mode to a non-connected mode, or any other suitable message.

At block 302 the method comprises determining whether the at least one reporting condition has been satisfied. The reporting condition can relate to a probability that CA/DC will be set up after transition to the connected mode. For example, if it is likely that CA/ DC are to be set up then the measurement report would be needed and if it is unlikely that CA/DC are to be set up then the measurement report would not be needed.

Determining whether the at least one reporting condition has been satisfied can comprise determining if a threshold for data volume which has triggered a transition to the connected mode has been exceeded. The reporting condition can indicate a threshold for a data volume which has triggered a transition to a connected mode at which CA/DC may be needed and at which the UE 106 should report the measurement results.

In some examples the determining can comprise determining a probability that CA/ DC are to be setup after transition to a connected mode.

The determining can be performed on transition to the connected mode.

In some examples the configuration can indicate multiple reporting conditions and different reporting conditions can relate to different thresholds for data volume. The thresholds for the data volume can be set by a network entity 102. The UE 106 can determine the data volume. In some examples the UE 106 can determine pending uplink data to be transmitted from UE which triggered initiation of mobile originated (MO) connection. In some examples the UE 106 can receive an indication of downlink data volume from a network entity 102 which triggered initiation of mobile terminated (MT) connection. In some examples the UE 106 can receive an indication that the threshold for data volume has been exceeded from a network entity 102 which triggered initiation of mobile terminated (MT) connection. The indications can be received as an indication within a paging message, as a specified paging occasion, as an assignment of multiple Interactive - Radio Network Temporary Identifier (I-RNTIs), or by any other suitable means.

At block 304 the method comprises reporting measurement results based on the determination. That is, if the reporting condition is satisfied then the results are reported and if the reporting condition is not satisfied then the results are not reported.

In examples where the configuration indicates which cells could be used for CA/DC the measurement report can relate to the cells that could be used for CA/DC.

Reporting the measurement results can comprise requesting uplink (UL) resources or searching for dynamic grants. The UL resources can be requested by adding a scheduling request with a buffer status report to random access channel (RACH) message 3.

In some examples the method can comprise blocks that are not shown in Fig. 3A. For example, the method can comprise determining an availability of measurement results. If the UE 106 determines that it does not yet have measurement results available then it continues with the measurements. In such cases, the UE 106 can continue measurements on a configured carrier list after the transition to connected mode. The UE 106 can report the measurements when the measurements are completed.

The example method of Fig. 3B can be implemented by a network entity 102. The network entity 102 could be a gNB of a PCell or any other suitable entity. The method of Fig. 3B corresponds to the method of Fig. 3A in that the network entity 102 that the performs the method of Fig. 3B sends the configuration to a UE 106 that performs the method of Fig. 3A.

At block 310 the method comprises transmitting a configuration. The configuration comprising at least one reporting condition to be used at transitions of an apparatus such as a UE 106 to a connected mode. The at least one reporting condition can relate to a probability that CA/DC are to be used after transition to a connected mode. The at least one reporting condition can indicate a threshold for data volume which has triggered a transition to the connected mode has been exceeded. <>

The configuration can be sent at transition from a connected state to a non-connected state. The configuration can be sent via any suitable signalling such as an RRC message or other ASN. 1 type message or SIB. The RRC message could be an RRCRelease, or RRCRelease with SuspendConfig, or an RRC message at a transition from a connected mode to a non-connected mode, or any other suitable message.

At block 312 the method comprises receiving a report from the UE 106. The report comprises measurement results and the report is sent in accordance with the at least one reporting condition.

At block 314 the network entity 102 determines whether to enable carrier aggregation or dual connectivity based on the received report.

The network entity can 102 can also perform additional actions that are not shown in Fig. 3B. For example the network entity 102 can transmit an indication of data volume to the UE 106. This can enable the UE 106 to determine if there is a high data volume. In some examples the network entity 102 can transmit an indication that the threshold for the data volume has been exceeded to the UE 106. The indication can be provided as an indication within paging message, a specified paging occasion, an assignment of multiple I-RNTIs or any other suitable means.

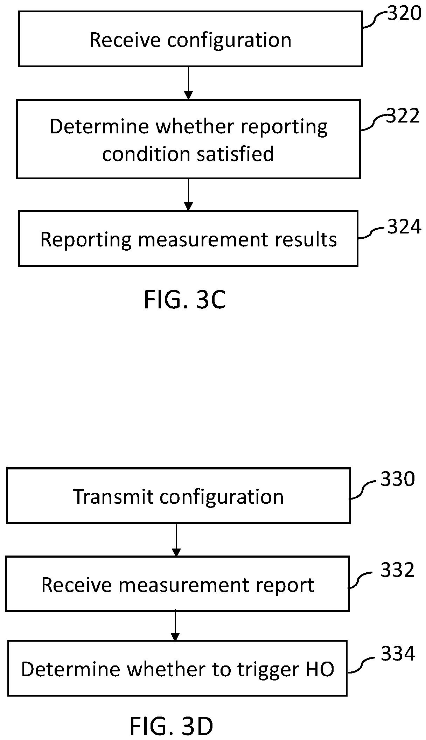

Fig. 3C shows another example method that can be implemented by a UE 106 or an apparatus controlling a UE 106. This method is similar to that shown in Fig. 3A but in this example the reporting condition can be related to the probability that a handover is to be triggered after the UE is transitioned to a connected mode.

At block 320 the method comprises receiving a configuration. The configuration comprises at least one reporting condition to be used upon transition of the UE 106 to a connected mode. The UE 106 can transition from a non-connected mode to a connected mode. The non-connected mode can be an idle mode or an inactive mode or any other suitable mode.

In this case the reporting condition comprises one or more criteria for reporting measurement results from the UE 106 to the network entity 102A where the criteria relate to the probability that handover is to be triggered after the transition. For instance, the reporting condition can comprise one or more criteria relating to the mobility of the UE 106 or the proximity of the UE 106 to the edge of a cell.

The configuration can be received from a network entity 102 such as a gNB. The configuration can be received at transition from a connected state to a non-connected state. The configuration can be received via any suitable signalling such as an RRC message or other ASN. 1 type message or SIB. The RRC message could be an RRCRelease, or RRCRelease with SuspendConfig, or an RRC message at a transition from a connected mode to a non-connected mode, or any other suitable message.

At block 322 the method comprises determining whether the at least one reporting condition has been satisfied. The reporting condition can relate to a probability that handover will be triggered after transition to the connected mode. For example, if it is likely that handover is to be triggered then the measurement report would be needed and if it is unlikely that handover is to be triggered then the measurement report would not be needed.

In this case determining whether the at least one reporting condition has been satisfied can comprise determining mobility of the UE 106 or proximity of the UE 106 to an edge of a cell or determining any other suitable criteria. Determining the mobility of the UE 106 can comprise determining whether the mobility of the UE 106 is above a configured speed. Determining the proximity of the UE 106 to an edge of a cell can comprise determining whether a threshold for the measured reference signal received power from a camped cell has been exceeded or determining relative RSRP from a camped cell and one or more neighboring cells.

The determining can be performed on transition to the connected mode.

In some examples the configuration can comprise different thresholds for reporting events where the different thresholds are associated with different probabilities that handover is to be triggered.

At block 324 the method comprises reporting measurement results based on the determination. That is, if the reporting condition is satisfied then the results are reported and if the reporting condition is not satisfied then the results are not reported.

Reporting the measurement results can comprise requesting uplink (UL) resources or searching for dynamic grants. The UL resources can be requested by adding a scheduling request with a buffer status report to random access channel (RACH) message 3.

In some examples the method can comprise blocks that are not shown in Fig. 3C. For example, the method can comprise determining an availability of measurement results. If the UE 106 determines that it does not yet have measurement results available then it continues with the measurements. In such cases, the UE 106 can continue measurements on a configured carrier list after the transition to connected mode. The UE 106 can report the measurements when the measurements are completed.

The example method of Fig. 3D can be implemented by a network entity 102. The network entity 102 could be a gNB of a PCell or any other suitable entity. The method of Fig. 3D corresponds to the method of Fig. 3C in that the network entity 102 that the performs the method of Fig. 3D sends the configuration to a UE 106 that performs the method of Fig. 3C.

At block 330 the method comprises transmitting a configuration. The configuration comprising at least one reporting condition to be used upon transitions of an apparatus such as a UE 106 to a connected mode. The at least one reporting condition can relate to a probability that a handover is to be triggered after transition to a connected mode. The at least one reporting condition can indicate a threshold for mobility of the UE 106 or for proximity of the UE 106 to an edge of a cell.

The configuration can be sent at transition from a connected state to a non-connected state. The configuration can be sent via any suitable signalling such as an RRC message or other ASN. 1 type message or SIB. The RRC message could be an RRCRelease, or RRCRelease with SuspendConfig, or an RRC message at a transition from a connected mode to a non-connected mode, or any other suitable message.

At block 332 the method comprises receiving a report from the UE 106. The report comprises measurement results and the report is sent in accordance with the at least one reporting condition.

At block 334 the network entity 102 determines whether to perform handover based on the received report.

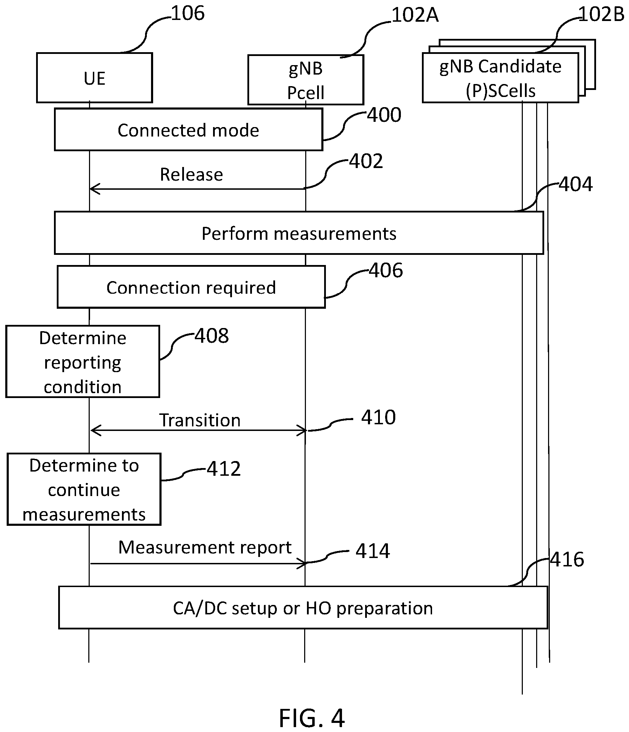

Fig. 4 shows an example early measurement reporting procedure according to examples of the disclosure. The early measurement reporting procedure is implemented by a UE 106 and multiple network entities. In this case a first network entity 102A is a gNB of a PCell and one or more other network entities 102B are the gNBs of candidate SCells or the gNBs of candidate PSCells.

At block 400 the UE 106 is in a connected mode with a PCell. The connected mode can be RRC_CONNECTED.

At block 402 the UE 106 is released from the connected mode. The UE 106 is configured to perform measurements when it is in a non-connected mode. The first network entity 102A can release the UE 106 by sending an RRCRelease signal or by sending an RRCRelease signal with SuspendConfig, or by any other suitable means. Upon releasing the UE 106 from the connected mode the first network entity 102A can provide a configuration to the UE 106. The configuration can be an early measurement report configuration. This configures the UE 106 to measure a list of carriers for early reporting when the UE 106 transitions back to the connected mode.

The configuration also comprises a reporting condition. The reporting condition comprises one or more criteria for reporting measurement results from the UE 106 to the network entity 102A. The criteria can be related to the likelihood that the measurements will be needed by the network entity 102. For instance, the criteria could be related to the probability that CA/ DC are to be setup after transition to a connected mode or could be related to the probability that handover is to be triggered.

The reporting condition can indicate the UE 106 to trigger the measurement report when the measurement report is ready. There is no requirement for the UE 106 to receive a specific request for the measurement report from the network entity 102. The measurement report is provided if the measurements are completed before the UE 106 has received new *RRCReconfiguration* with measurement configuration.

In some examples the reporting conditions can relate to thresholds relating to radio conditions in the measured carrier of the camped cell as well as one or more carriers from the list of carriers in *measldleCarrierListNR* and/or *measReselectionCarrierListNR-r18.* The thresholds can be based on an absolute reference signal received power RSRP value measured on a carrier or a relative RSRP value measured on a carrier from the list of carriers in *measIdleCarrierListNR* and/or *measReselectionCarrierListNR-r18* compared to RSRP value measured on the camped cell.

In some examples the configuration can indicate the UE 106 to continue measurements on configured *measIdleCarrierListNR* (and/or *measReselectionCarrierListNR-r18)* after transition to the connected mode until the UE 106 has the appropriate samples to generate results with requested accuracy and report when ready. In such example the UE 106 would not need to indicate the availability of the measurements to the network entity 102. The UE 106 can just complete the measurements, evaluate the condition, and report.

In some examples the measurement results can be considered to be ready if a defined number of samples from a connection establishment message are available. For instance, five samples can be measured for a configured carrier to meet the connected mode accuracy requirements.

In some examples the reporting condition can comprise different thresholds for reporting events. The different thresholds can be associated with different probabilities of CA/DC being setup or different probabilities of handover being triggered. For instance, the configuration can indicate multiple reporting conditions where different reporting conditions are associated with different data volumes.

In such examples, the configuration can indicate to the UE 106 which band combinations or SCell configurations are possible in the case of CA/DC setup. This can enable the UE 106 to determine which cells need reporting on and which cells do not need reporting on.

At block 404 the UE 106 performs the measurements according to the received configuration.

At block 406 it is determined that connection is required. The determination that a connection is required can be based on the data volume for a call. The call can be an MO call or an MT call.

At block 408 The UE 106 determines whether the reporting condition has been satisfied. In some examples the determining whether the reporting condition has been satisfied can comprise determining a probability of CA/DC setup after transition to the connected mode. This probability can be determined by evaluating one or more criteria relating to the probability of CA/DC such as determining if a threshold for data volume which has triggered the transition to the connected mode has been exceeded. The threshold for the data volume could be indicated in the reporting condition.

In examples where the probability of CA/DC setup is determined by the data volume, the UE 106 can use any suitable means to determine the data volume. In some examples the UE 106 can determine the pending UL data volume. This can then be compared against the threshold provided by the network entity. In some examples the UE 106 can receive an indication of downlink (DL) data volume from the network entity. The indication could comprise an indication of the actual data volume or an indication that the threshold for the DL data volume has been exceeded.

The indication can be provided from the network entity 102 as an indication within paging message, a specified paging occasion (PO), an assignment of multiple I-RNTIs or any other suitable means. Using the assignment of multiple I-RNTIs can provide the benefit that it does not affect POs or the latency of a UE 106 receiving a paging. This also means that other UEs 106 do not receive the paging which avoids energy consumption at the other UEs 106.

In some examples the data volume could also be relayed from the network entity 102 by way of early paging indication (EPI) subgrouping, and assigning the UE 106 to several subgroups, and associating the subgroups to different data volumes.

In some examples the determining whether the reporting condition has been satisfied can comprise determining a probability of handover being used after transition to the connected mode. This probability can be determined by evaluating the mobility of the UE 106, the proximity of the UE 106 to an edge of a cell, or by evaluating any other suitable criteria. The UE 106 can determine if the reporting condition has been satisfied by combining measurements from the camped cell and one or more neighbouring cells. The measurements are made in the non-connected mode within a defined time window.

At block 410 the UE 106 transitions to the connected mode.

At block 412 the UE 106 can determine whether to continue measurements. The reporting condition can indicate that the measurement report is provided when ready if the reporting condition is satisfied. The configuration can indicate the requirements for the measurements or other information. In some examples the measurement results can be considered to be ready if a defined number of samples from a connection establishment message are available. For instance, five samples can be measured for a configured carrier to meet the connected mode accuracy requirements.

If the UE 106 determines that the measurement report is not ready the UE 106 will continue to perform the measurements and will then prepare the measurement report when the measurements are ready. If the UE 106 determines that the measurement report is ready then the UE 106 does not need to perform any more measurements.

At block 414 the UE 106 transmits the measurement report to the network entity 102A. The measurement report is sent when the UE 106 has determined that it is ready. The UE 106 does not need to wait for a specific request from the network entity 102A. Instead, if the UE 106 has determined that the reporting condition has been satisfied and the measurement report is ready then the UE 106 can add scheduling request (SR) with the buffer status report (BSR) to RACH message 3, *RRCSetupRequest*/*RRCResumeRequest,* to receive UL resources to transmit the measurement report. Alternatively, the UE 106 can search for dynamic grants to transmit the measurement report. This alternative can be used when the UE 106 does not have complete measurements at the time it initiates transition to RRC_CONNECTED.

The measurement report can comprise results from the camped cell (serving cell after transition) and N strongest measured carriers from the list in *measIdleCarrierListNR* (and/or *measReselectionCarrierListNR-r18)* including the carrier which triggered a report (for cases of event triggered report) In cases where CA/DC setup may be required, the UE 106 can determine how many carriers are needed (for example, by preconfiguring data volume - amount of carriers mapping), and the UE 106 only provides the measurement reports for the relevant cells.

At block 416 the network entity 102A uses the measurement report to determine whether toe setup CA/DC or whether to perform handover.

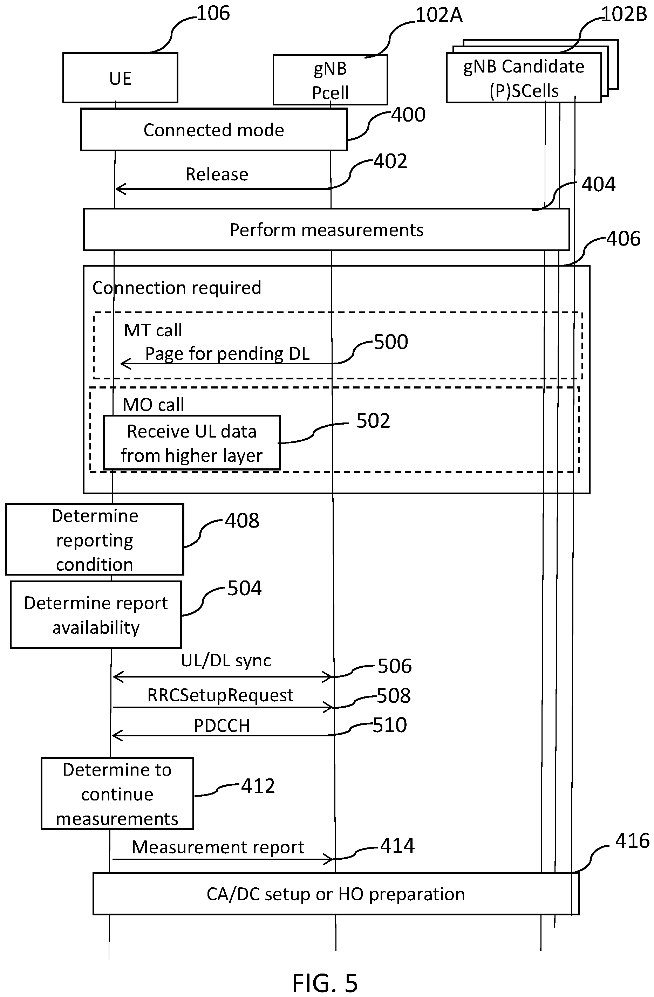

Fig. 5 shows another early measurement reporting procedure. This is similar to the examples shown in Fig. 4 but shows further details. In the example of Fig. 5 the early measurement reporting procedure is implemented by a UE 106 and multiple network entities. In this case a first network entity 102A is a gNB of a PCell and one or more other network entities 102B are the gNBs of candidate SCells or the gNBs of candidate PSCells.

Blocks 400 to 404 can be as shown in Fig. 4 and corresponding reference numerals are used for these features.

At block 400 the UE 106 is in a connected mode with a PCell. The connected mode can be RRC_CONNECTED.

At block 402 the UE 106 is released from the connected mode. Upon releasing the UE 106 from the connected mode the first network entity 102A can provide a configuration to the UE 106. The configuration can be an early measurement report configuration. This configures the UE 106 to measure a list of carriers for early reporting when the UE 106 transitions back to the connected mode. The measurement configuration can comprise at least *measIdleCarrierListNR* and/or *measReselectionCarrierListNR-r18.* The configuration can also comprise one or more reporting conditions. The reporting conditions can be as described in relation to Figs 3A to 4 and can be used by UE 106 to determine whether to transmit early measurement report after transition back to the connected mode.

The reporting conditions can comprise reporting events based on radio link conditions measured toward the camped cell of the UE 106 as well as one or more other cells. The one or more other cells can have the same carrier frequencies or different carrier frequencies.

In examples where the reporting condition is related to a probability that the network entity 102A will to setup CA/DC after transition to RRC_CONNECTED the network entity 102A can provide a *dataThreshold* value for this purpose. The UE 106 can use this threshold and consider the condition for early reporting to be met if the expected data volume is higher or equal to the configured *dataThreshold.* The *dataThreshold* configuration can also indicate how many cells would need to be set up. The measurement configuration can also indicate which cells are likely to be used if a subset of available cells is set up for CA/DC. The UE 106 can limit which measurements are reported at the transition from non-connected mode to connected mode based on this configuration.

In examples where the reporting condition is related to a probability of handover being performed shortly after transition to RRC_CONNECTED the network entity 102A can provide reporting conditions based on mobility of the UE 106 and/or the UE 106 being close to a cell edge. The UE 106 can consider the condition for early reporting to be met if for example its mobility is middle or high or higher than configured speed and/or it is at cell edge. The UE 106 can be determined to be in proximity to cell edge if the measured RSRP at its camped cell is below a configured threshold. The camped cell is the cell which becomes UEs 106 serving cell after transition to RRC_CONNECTED.

At block 404 the UE 106 performs the measurements according to the received configuration.

At block 406 it is determined that connection is required. The UE 106 can initiate transition to RRC_CONNECTED as response to paging from the network entity 102A (MT call) or if it receives UL data for transmission from higher layers (MO call).

For the case of an MT call, at block 500, the network entity pages for pending DL. The network entity 102A can add information indicating the data volume in the paging message or by selecting a specific paging occasion.

For the case of an MO call, at block 502, the UE 106 receives information about the data volume for transmission from a higher layer.

At block 408 The UE 106 determines whether the configured reporting condition has been satisfied. This can be as shown in Fig. 4 and as described above. In some examples the UE 106 can determine the probability of CA/DC setup based on the BSR and the configured *dataThreshold* as provided by the network entity 102A. The UE 106 can also determine what measurements to include into the measurement report according to the indication of which cells are likely to be used if a subset of available cells is set up for CA/DC. In some examples the UE 106 can determine the probability of handover based on the reporting condition.

At block 504 the UE 106 determine if a measurement report is available. The UE 106 can determine if a complete measurement report with a specified level of accuracy is available.

At blocks 506 and 508 the UE 106 initiates RACH access to establish/resume RRC connection. The UE 106 can add a BSR relating to the size of the measurement report in MSG3, *RRCSetupRequest* or *RRCResumeRequest,* as scheduling request.

In some examples the UE 106 can decide to select dynamic grants (DG) to transmit the measurement report. This can be used if the UE 106 has not completed measurement at this point and does not have full knowledge about the measurement report size.

At block 510 the UE 106 receives PDCCH with configured grants for transmission of the measurement report.

At block 412 the UE 106 can determine whether to continue measurements. This can be as shown in Fig. 4 and described above. The UE 106 can determine whether it should continue measurements before it generates the measurement report. This determination may be dependent on the measurement report accuracy.

If it was determined at block 408 that the reporting condition was not met then the UE 106 can discontinue the measurements. Instead of providing a measurement report the UE 106 can wait for *RRCReconfiguration* to start RRM measurements in RRC_CONNECTED.

At block 414 the UE 106 transmits the measurement report to the network entity 102A. This can be as shown in Fig. 4 and described above. The UE 106 can transmit the measurement report using a configured grant (CG) received at block 510 or selects one or more DGs for the transmission of the measurement report.

At block 416 the network entity 102A uses the measurement report to determine whether toe setup CA/DC or whether to perform handover. This can be as shown in Fig. 4 and described above. The network entity 102A can use the received measurement report for potential fast CA/DC setup. For example, the network can perform addition of SCell or PSCell. The network entity 102A can use the received measurement report for handover preparation to handover the UE 106 to a new PCell.

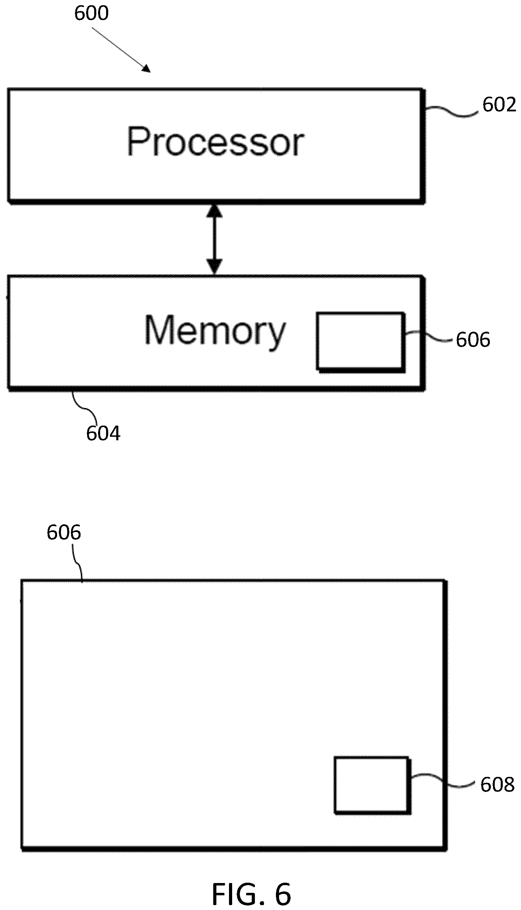

Fig. 6 shows an example controller 600. The controller 600 could be provided within a UE 106, or any other suitable entity. Implementation of the controller 600 may be as controller circuitry. The controller 600 may be implemented in hardware alone, have certain aspects in software including firmware alone or can be a combination of hardware and software (including firmware). The controller 600 can provide an apparatus for implementing the disclosure of could be provided as part of an apparatus that implements the disclosure.

As illustrated in Fig. 6 the controller 600 can be implemented using instructions that enable hardware functionality, for example, by using executable instructions of a computer program 606 in a general-purpose or special-purpose processor 602 that may be stored on a machine readable storage medium (disk, memory etc.) to be executed by such a processor 602.

The processor 602 is configured to read from and write to the memory 604. The processor 602 may also comprise an output interface via which data and/or commands are output by the processor 602 and an input interface via which data and/or commands are input to the processor 602.

The memory 604 stores instructions, program 606, or code that controls the operation of the apparatus when loaded into the processor 602. The instructions, program 606, or code provide the logic and routines that enables the apparatus to perform the methods illustrated in the Figs. The processor 602 by reading the memory 604 is able to load and execute the instructions, program 606, or code.

In some examples where the controller 600 is provided within an apparatus that controls a user equipment, the controller therefore comprises means for:
receiving 300 a configuration, the configuration comprising at least one reporting condition for reporting measurement results, the reporting condition to be used upon transitions of the apparatus to a connected mode;
determining 302 whether the at least one reporting condition has been satisfied, wherein determining whether the at least one reporting condition has been satisfied comprises determining a probability that carrier aggregation (CA) or dual connectivity (DC) are to be setup after transition to a connected mode; and
reporting 304 measurement results based on the determination.

In some examples where the controller 600 is provided within a network entity, the controller therefore comprises means for:
transmitting 310 a configuration, the configuration comprising at least one reporting condition for reporting measurement results, the reporting condition to be used upon transitions of an apparatus to a connected mode;
receiving 312 a report from the apparatus, the report comprising measurement results and the report being sent in accordance with the at least one reporting condition; and
determining 314 whether to enable carrier aggregation or dual connectivity based on the received report.

The instructions, program 606, or code may arrive at the apparatus via any suitable delivery mechanism 608. The delivery mechanism 608 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 606. The delivery mechanism may be a signal configured to reliably transfer the computer program 606. The apparatus may propagate or transmit the computer program 606 as a computer data signal.

The term "non-transitory" as used herein, is a limitation of the medium itself that is, tangible, not a signal ) as opposed to a limitation on data storage persistency (for example, RAM vs. ROM).

The computer program 606 can comprise computer program instructions for causing an apparatus to perform at least the following or for performing at least the following:
receiving 300 a configuration, the configuration comprising at least one reporting condition for reporting measurement results, the reporting condition to be used upon transitions of the apparatus to a connected mode;
determining 302 whether the at least one reporting condition has been satisfied, wherein determining whether the at least one reporting condition has been satisfied comprises determining a probability that carrier aggregation (CA) or dual connectivity (DC) are to be setup after transition to a connected mode; and
reporting 304 measurement results based on the determination.

The computer program 606 can comprise computer program instructions for causing a network entity to perform at least the following or for performing at least the following:
transmitting 310 a configuration, the configuration comprising at least one reporting condition for reporting measurement results, the reporting condition to be used upon transitions of an apparatus to a connected mode;
receiving 312 a report from the apparatus, the report comprising measurement results and the report being sent in accordance with the at least one reporting condition; and
determining 314 whether to enable carrier aggregation or dual connectivity based on the received report.

The computer program instructions may be comprised in a computer program, a non-transitory computer readable medium, a computer program product, a machine-readable medium. In some but not necessarily all examples, the computer program instructions may be distributed over more than one computer program.

Although the memory 604 is illustrated as a single component/circuitry it may be implemented as one or more separate components/circuitry some or all of which may be integrated/removable and/or may provide permanent/semi-permanent/ dynamic/cached storage.

Although the processor 602 is illustrated as a single component/circuitry it may be implemented as one or more separate components/circuitry some or all of which may be integrated/removable. The processor 602 may be a single core or multi-core processor.

References to "computer-readable storage medium", "computer program product", "tangibly embodied computer program" etc. or a "controller", "computer", "processor" etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other processing circuitry including quantum processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term "circuitry" can refer to one or more or all of the following:
(a) hardware-only circuitry implementations (such as implementations in only analog and/or digital circuitry) and
(b) combinations of hardware circuits and software, such as (as applicable):
   (i) a combination of analog, digital and/or quantum hardware circuit(s) with software/firmware and
   (ii) any or all portions of hardware processor(s) (including digital and/or quantum processor(s)) with software, and memory(ies) that work together to cause an apparatus, such as a mobile device, computing device or server, to perform various functions and
(c) any or all portions of hardware circuit(s) such as a microprocessor(s) and/or quantum processor(s) that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the claim element, a baseband integrated circuit or processor integrated circuit for a mobile device or a similar integrated circuit in a server, a cellular network device, or other computing or network device.

The blocks illustrated in the Figs. can represent steps in a method and/or sections of code in the computer program 606. The illustration of a particular order to the blocks does not necessarily imply that there is a required or preferred order for the blocks and the order and arrangement of the block can be varied. Furthermore, it can be possible for some blocks to be omitted.

Where a structural feature has been described, it may be replaced by means for performing one or more of the functions of the structural feature whether that function or those functions are explicitly or implicitly described.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of `at least one' or 'one or more' may be used to emphasis an inclusive meaning but the absence of these terms should not be taken to infer any exclusive meaning.

The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

As used herein, the terms "the at least one" and "the one or more" mean "any one of the at least one" and "any one of the one or mor" respectively.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

## Claims

1. An apparatus comprising:
at least one processor;
and at least one memory storing instructions that, when executed by the at least one processor, cause the apparatus to perform at least:
receiving a configuration, the configuration comprising at least one reporting condition for reporting measurement results, the reporting condition to be used upon transitions of the apparatus to a connected mode;
determining whether the at least one reporting condition has been satisfied, wherein determining whether the at least one reporting condition has been satisfied comprises determining a probability that carrier aggregation (CA) or dual connectivity (DC) are to be setup after transition to a connected mode; and
reporting measurement results based on the determination.

2. The apparatus of any preceding claim wherein the at least one reporting condition indicates a threshold for data volume which has triggered a transition to a connected mode at which CA/DC may be needed and at which the apparatus should report the measurement results and wherein determining a probability that CA/DC are to be setup comprises determining whether the threshold for the data volume has been exceeded.

3. The apparatus of claim 2 wherein the configuration indicates multiple reporting conditions and different reporting conditions relate to different thresholds for data volume.

4. The apparatus of any of claims 2 to 3 wherein the thresholds for data volume are set by a network entity.

5. The apparatus of any of claims 2 to 4 wherein determining if the threshold for the data volume has been exceeded comprises one of:
determining pending uplink data volume ;
receiving an indication of data volume from a network entity; or
receiving an indication that the threshold for the data volume has been exceeded from a network entity.

6. The apparatus of any preceding claim wherein the configuration is received at transition from a connected state to a non-connected state.

7. The apparatus of any preceding claim wherein the configuration is received via at least one of:
Radio Resource Control (RRC) message
System Information Block (SIB).

8. The apparatus of any preceding claim wherein the at least one processor and the at least one memory are also arranged to cause the apparatus to determine availability of measurement results.

9. The apparatus of any preceding claim wherein the at least one processor and the at least one memory are also arranged to cause the apparatus to perform continuing measurements on a configured carrier list after the transition to connected mode.

10. The apparatus of claim 19 wherein the at least one processor and the at least one memory are also arranged to cause the apparatus to perform reporting the measurement results when the measurements are completed.

11. The apparatus of any preceding claim wherein the at least one processor and the at least one memory are also arranged to cause the apparatus to perform reporting the measurement results without receiving a request for the measurement report.

12. The apparatus of any preceding claim wherein the configuration is for early measurement reporting.

13. A network entity comprising:
at least one processor;
and at least one memory storing instructions that, when executed by the at least one processor, cause the network entity to perform at least:
transmitting a configuration, the configuration comprising at least one reporting condition for reporting measurement results, the reporting condition to be used upon transitions of an apparatus to a connected mode;
receiving a report from the apparatus, the report comprising measurement results and the report being sent in accordance with the at least one reporting condition; and
determining whether to enable carrier aggregation or dual connectivity based on the received report.

14. The network entity of claim 13 wherein the at least one reporting condition relates to a probability that carrier aggregation (CA) or dual connectivity (DC) are to be used after transition to a connected mode.

15. The network entity of any of claims 13 to 14 wherein the at least one reporting condition indicates a threshold for data volume which has triggered a transition to the connected mode has been exceeded.
